(19) Europäisches Patentamt
European Patent Office
Office européen des brevets

(11) **EP 3 092 472 B1**

(12) **EUROPEAN PATENT SPECIFICATION**

(45) Date of publication and mention
of the grant of the patent:
**27.11.2019 Bulletin 2019/48**

(21) Application number: **15707772.8**

(22) Date of filing: **09.01.2015**

(51) Int Cl.:
*G01M 13/02* *(2019.01)*    *G01M 13/04* *(2019.01)*

(86) International application number:
**PCT/IB2015/050165**

(87) International publication number:
**WO 2015/104678 (16.07.2015 Gazette 2015/28)**

(54) **METHOD AND DEVICE FOR PROVIDING A CONDITION EVALUATION OF A MECHANICAL STRUCTURE WHICH INCLUDES A ROTATABLE MACHINE COMPONENT**

VERFAHREN UND VORRICHTUNG ZUR ZUSTANDSBEURTEILUNG EINER MECHANISCHEN STRUKTUR MIT EINEM DREHBAREN MASCHINENTEIL

PROCÉDÉ ET DISPOSITIF PERMETTANT DE FOURNIR UNE ÉVALUATION D'ÉTAT D'UNE STRUCTURE MÉCANIQUE QUI COMPREND UN COMPOSANT DE MACHINE ROTATIVE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **10.01.2014 NO 20140031**

(43) Date of publication of application:
**16.11.2016 Bulletin 2016/46**

(73) Proprietor: **Vibsim**
**0584 Oslo (NO)**

(72) Inventor: **BARIKMO, Aasmund**
**N-0584 Oslo (NO)**

(74) Representative: **Onsagers AS**
**P.O. Box 1813 Vika**
**0123 Oslo (NO)**

(56) References cited:
**EP-A1- 1 097 363       US-A1- 2004 034 483**
**US-A1- 2011 307 218**

**Description**

**TECHNICAL FIELD**

The invention relates to a method for providing a condition evaluation of a mechanical structure which includes a rotating machine component. The invention also relates to a computer program and a device for implementing the method.

**BACKGROUND**

Mechanical structures which include one or more rotating machine components, including mechanical systems, machines, vehicles, motors or engines, generators, gear transmissions, turbines etc., are generally subject to wear and faults or defects during operation. There is therefore a need to detect and identify different conditions in a mechanical structure. In particular, there is a need to detect and identify faults at an early stage so as to enable necessary measures, such as replacement or repair of certain elements, to be implemented in an expedient and cost-effective manner.

Solutions for early detection of faults or defects in mechanical structures, especially rotating machine elements, are already known.

US 7 421 349 describes a device and a method for detecting a developing fault in a ball bearing, where vibrations of an apparatus containing the ball bearing are measured. The method comprises searching for a fault signature in the frequency spectrum of the vibration signal.

US 2013/0096848 teaches a method and a system for detecting roller bearing faults in rotating machines. A sensor signal is measured from a vibration sensor. A fault in a bearing is detected by generating an envelope curve around the measuring signal and transforming this envelope curve into a frequency spectrum.

US 2004/034483 discloses a method for detecting rotor unbalance, based on vibration measurements.

The prior art presents solutions for detecting whether a mechanical structure which includes a rotating machine element is considered to be in a normal condition or a developing fault condition. There is therefore still a need to provide a solution that is capable of distinguishing between different developing fault conditions for the mechanical structure. There is also a need to be able to give warning of fault conditions at an earlier stage than is done by the known solutions.

SUMMARY

According to an aspect of the invention, a method is provided for providing a condition evaluation of a mechanical structure which includes a rotating machine component. The method comprises providing an input signal that represents mechanical vibrations in the mechanical structure; providing a reference signal; and selecting, on the basis of the input signal and the reference signal, one among a plurality of predetermined condition evaluations for the mechanical structure. The reference signal is generated on the basis of at least one parameter for the rotating machine component and a rotational speed for the rotating machine component. According to another aspect of the invention, a computer program is provided. The computer program comprises processing instructions which, when executed by an electronic processing unit, cause the electronic processing unit to perform the method as outlined above.

The invention also relates to a device for providing a condition evaluation of a mechanical structure which includes a rotating machine component. The device comprises an electronic processing unit and a memory, the memory containing a computer program as mentioned above.

The invention is set forth in the patent claims.

BRIEF DESCRIPTION OF THE DRAWINGS

The invention will be described in more detail with the aid of embodiments and with reference to the drawings.

Fig. 1 is a schematic block diagram illustrating a system for providing a condition evaluation of a mechanical structure which includes a rotating machine component.

Fig. 2 is a schematic flow diagram illustrating principles of a method for providing a condition evaluation of a mechanical structure, e.g., a gearbox, which includes a rotating machine component in the form of a gear.

Fig. 3 is a schematic flow diagram illustrating principles of a method for providing a condition evaluation of a mechanical structure which includes a rotating machine component in the form of a ball bearing.

Fig. 4 is a schematic flow diagram illustrating possible principles of generating shock pulses in a reference signal generation module.

Fig. 5 is a schematic figure illustrating certain parameters for a ball bearing.

DETAILED DESCRIPTION OF EMBODIMENTS

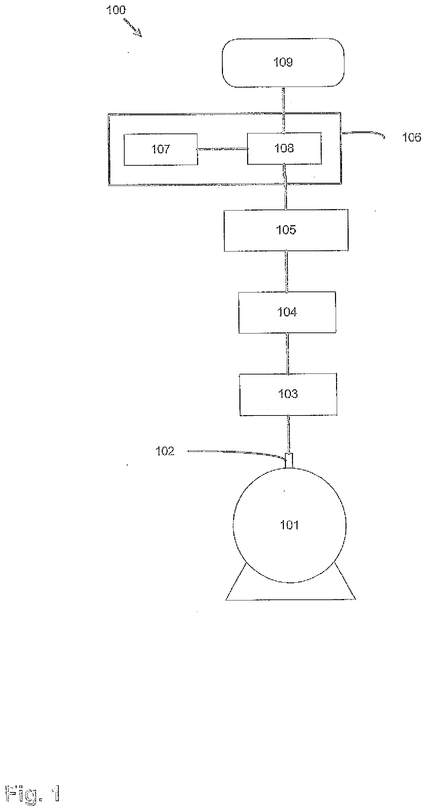

Fig. 1 is a schematic block diagram illustrating a system 100 for providing a condition evaluation of a mechanical structure 101 which includes a rotating machine component.

The mechanical structure 101, which includes a rotating machine component, may, for example, contain a toothed gearing.

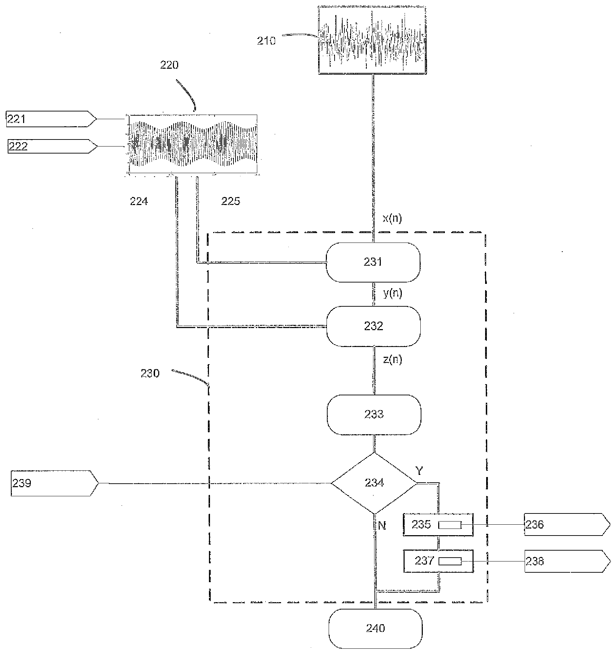

For instance, the structure 101 can be a device for conversion of rotational speed and torque on rotational movement, such as a gearbox or an angular drive for a boat propeller. Embodiments of this type are also described in more detail below with reference to Figure 2.

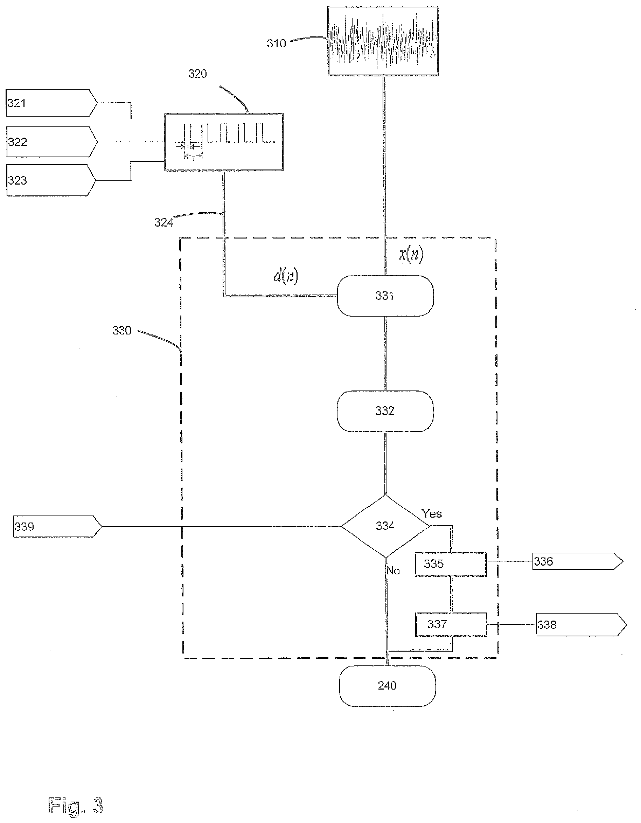

The mechanical structure 101 which includes a rotating machine component may alternatively contain a rotating bearing. Such a structure 101 may, for example, be a motor or engine, a generator, compressor, pump or fan. Embodiments of this type are also described in more detail below with reference to Figure 3.

The system 100 comprises a sensor device 102 for providing a measuring signal that represents mechanical vibrations in the mechanical structure 101. The sensor device 102 may comprises a microphone or a vibration sensor. The sensor device 102 may, e.g., be of an electromagnetic or piezoelectric type. The sensor device 102 may be an accelerometer, e.g., a piezoelectric accelerometer. Piezoelectric accelerometers can have a constant signal response across a frequency range of up to, e.g., 20 kHz or more. The acceleration signal can be integrated to give speed and double integrated to give position.

The sensor device 102 can be mounted on an outer wall of the mechanical structure 101, such that the vibrations are transferred as directly as possible to the sensor device 102. Alternatively, the sensor device 102 can be installed at a distance from the mechanical structure 101, e.g., with air in between. This may be most appropriate in cases where lower frequencies than the audible range (e.g., < 20 Hz) do not represent particularly relevant vibrations. In another alternative variant, the sensor device 102 can be installed within the exterior of the mechanical structure 101.

The measuring signal that is emitted by the sensor device 102 is sampled, quantised and converted from analogue to digital in the signal conversion device 103. For this purpose, the signal conversion device 103 can comprise an electronic sampling circuit that samples the analogue measuring signal and preferably maintains the signal's value in a sampling period, and an A/D converter which emits time-discrete, digital representations of the measuring signal. For sampling and A/D conversion, a sampling rate can be used that may expediently be selected in the light of the variations in the vibrations to be measured. For a typical application, the vibrations to be measured can comprise the audible acoustic range (e.g., 20-20000 Hz). Embodiments and applications are also conceivable where the vibrations can comprise a range of more low frequency, non-audible frequencies (e.g., 1-20 Hz).

An expedient sampling rate may in such a case be a sampling rate that is otherwise used for regular sampling of audio signals, e.g., about 44 kHz. The sampling rate may otherwise be in the range of, e.g., 10 kHz-60 kHz.

In some embodiments or applications it may be desirable to measure vibrations in an ultrasonic range. In that case, it is expedient to choose a sampling rate of typically at least twice the highest desired frequency component in the measured signal.

The resultant digital signal, emitted by the signal conversion device 103, is stored advantageously in a memory, such as a ring buffer 104. In the module 105, a signal sample is then taken from these data, corresponding to a time segment, that is taken into account as input signal for the processing in the processing device 106. The time segment may, for example, be about 3 seconds, or in the range of 1 to 5 seconds.

The processing device 106 may comprise a digital processing unit 108, such as a microprocessor or microcontroller, a memory, I/O circuits etc. The memory may comprise a volatile or non-volatile memory, where a part of the memory contains a series of program instructions that cause the processing device to perform a method as disclosed in the present specification when the program instructions are executed.

The processing makes use of at least one reference signal, schematically indicated by 107. Such reference signals may be represented in a part of the processing unit's 108 memory.

The processing further comprises selecting, on the basis of the measuring signal and a number of reference signals, one among a plurality of predetermined condition evaluations for the mechanical structure.

During the processing, on the basis of the measuring signal and the reference signals, an evaluation is selected among a plurality of predetermined condition evaluations for the mechanical structure. Further, on the basis of this evaluation, a message regarding the condition is selected. This message may, e.g., be displayed on a display on a warning device 109.

The message can, for example, be displayed in plain text on the display. The message can comprise an identification of the relevant machine component to which the condition applies, and a more detailed description of the condition. The message may also comprise a value that indicates "volume" or the degree of a fault, degradation or the like of the relevant machine component. In the illustrative example, the message may read "Ball bearing no. 4 has an indentation in the outer ring, volume = 43".

Fig. 2 is a schematic flow chart illustrating principles of a method for providing a condition evaluation of a mechanical structure which includes a rotating machine component in the form of a gear. The mechanical structure can in this example be a gearbox, e.g., for a vehicle.

The method comprises, in the step indicated by 210, providing a measuring signal that represents mechanical vibrations in the mechanical structure with the aid of a vibration sensor or microphone. This signal can further be sampled, quantised and A/D-converted, and a limited time segment of the resultant digital signal can be taken, as explained with reference to Fig. 1 above. The resultant signal, which has a limited duration corresponding to the time segment, is given by x(n) in Fig. 2, and is used as input signal for the processing indicated by the stippled module 230.

In the processing module 230, the method further comprises selecting, on the basis of the input signal and a number of reference signals, one among a plurality of predetermined condition evaluations for the mechanical structure.

The applicant has found that out-of-round gears and out-of-roundness caused by damaged bearings or misaligned shafts will lead to vibrations in the mechanical structure that are characterised by amplitude-modulated vibration signals. The carrier wave is given by the tooth meshing frequency and the modulation frequency is given by the rotational frequency of the shaft that represents the out-of-roundness. Such out-of-roundness can therefore be detected with the aid of amplitude modulation.

Generally degraded gears will result in vibrations in the mechanical structure with increased amplitude and distortion of the sinusoidal meshing signal. This can be described as a general signal level increase and a relative increase of the higher order's frequency components. This type of degradation can therefore be detected with the aid of frequency spectrum analysis.

A damaged tooth in a gear will lead to an increase in the meshing signal each time the damaged tooth meshes. These increases will have a distance in time equal to the rotational period for the gear containing the damaged tooth. This type of damaged tooth can therefore be detected by subtracting the vibration signature for one tooth from the vibration signature of another tooth.

The time period between each time the subtraction gives a substantial contribution coincides with the period of rotation of the gear containing the damaged tooth.

In this embodiment, the reference signal comprises a modulated, stationary, periodic signal, typically an amplitude-modulated sinusoidal signal. The provision of the reference signal can be effected by generating the reference signal in the signal generation module 220.

The reference signal is generated in the signal generation module 220 on the basis of at least one parameter for the rotating machine component, in this case the gear, and a rotational speed for the rotating machine component, in this case the gear. More specifically, the reference signal can be generated for a predetermined type of fault, degeneration, wear or the like for a particular gear in the mechanical structure 101, on the basis of a first parameter 221 and a second parameter 222.

The first parameter 221 for the gear can, for example, represent the number of teeth in the gear in question.

The second parameter 222 can represent rotational speed of the gear, and thus a factor by which the number of teeth should be multiplied during calculation of the frequencies for respectively the tooth meshing and each of the gears included.

The rotational speed for the gear can be determined, for example, in one of the following three ways:

- The rotational speed can be a predetermined, fixed value. This may, for example, be the case where the gear is driven by a synchronous motor supplied with alternating current of known frequency.

- The rotational speed can be measured by means of a revolution counter or similar measuring equipment for rotational speed.

- The rotational speed can be determined with the aid of automatic frequency control, AFC. In such a case, a circuit for automatic frequency control can be adapted to "listen" to the gear, for example, by the provision of the signal 210 as mentioned above.

The reference signal generation module 220 can essentially be an AM modulator (amplitude modulator), which emits an output signal with carrier wave, upper and lower sidebands. The reference signal generation module can emit a first reference signal 225 that indicates tooth meshing frequency and a second reference signal 224 that indicates the rotational speed of the gear in question.

In this embodiment, the step of selecting one of a plurality of condition evaluations may comprise amplitude modulation of the input signal. The input signal x(t) is therefore passed to an AM demodulator 231. The first reference signal 225, which indicates tooth meshing frequency, is also passed to this demodulator.

The output signal from the AM demodulator 231, indicated by y(t), is passed to a filter 232, more specifically a band-pass filter, or alternatively a low-pass filter. The second reference signal 225 indicating rotational speed is also passed to the filter.

The AM demodulator 231 can, for example, comprise a superheterodyne receiver. In this case, the tooth meshing frequency is used for local oscillator and the rotational speed 224 is used as centre frequency of the band-pass filter 232.

*Amplitude-modulated signal from a gear transmission*

An amplitude-modulated signal from a gear transmission including a gear can be described as an AM radio signal where the vibration from the meshing corresponds to the carrier wave. Asymmetry from the gears corresponds to two-tone music. One of the tones comes from the rotational frequency of one of the gears. The other tone comes from the rotation frequency of the other gear.

$$x(t) = A \sin \alpha + ( A \sin \alpha * B \sin \beta )$$

$$x(t) = A \sin \alpha + \tfrac{1}{2}*A*B*\sin(\alpha+\beta) + \tfrac{1}{2}*A*B*\sin(\alpha-\beta)$$

**A sin** $\alpha$ is the tooth meshing vibration, which corresponds to the carrier wave in AM radio.
**B sin** $\beta$ is modulation from gear b, which corresponds to a tone in music from AM radio.
**A** is the value of the tooth meshing vibration
**B** is the value of the modulation from a gear b.
$\alpha = 2*\pi*f_a*t$ is the frequency of the meshing
$\beta = 2*\pi*f_b*t$ is the rotational frequency of gear b.

*Demodulation by the superheterodyne principle*

The section below provides further explanation of demodulation by the superheterodyne principle, which advantageously may be used in the AM demodulator 231.

Demodulation by the superheterodyne principle comes from the expression:

$$\sin r * \sin s = \tfrac{1}{2} \sin (r+s) + \tfrac{1}{2} \sin (r-s)$$

$$\text{Vibration is} \quad x(t) = A \sin \alpha + \tfrac{1}{2}*A*B*\sin(\alpha+\beta) + \tfrac{1}{2}*A*B*\sin(\alpha-\beta)$$

$$\text{Local oscillator} \quad lo(t) = \sin \alpha \text{ (corresponding to the signal 225 in Fig. 2)}$$

$$y(t) = x(t) * lo(t)$$

$$y(t) = (A \sin \alpha + \tfrac{1}{2}*A*B*\sin(\alpha+\beta) + \tfrac{1}{2}*A*B*\sin(\alpha-\beta) ) * \sin \alpha$$

$$\begin{aligned} y(t) = \ & (A \sin \alpha * \sin \alpha) + \\ & \tfrac{1}{2}*A*B*\sin(\alpha+\beta+\alpha) + \tfrac{1}{2}*A*B*\sin(\alpha+\beta-\alpha) + \\ & \tfrac{1}{2}*A*B*\sin(\alpha-\beta+\alpha) + \tfrac{1}{2}*A*B*\sin(\alpha-\beta-\alpha) \end{aligned}$$

$$y(t) = (A \sin \alpha * \sin \alpha) + \tfrac{1}{2}*A*B*\sin(2\alpha+\beta) +$$
$$\tfrac{1}{2}*A*B*\sin(\beta)+\tfrac{1}{2}*A*B*\sin(2\alpha-\beta) + \tfrac{1}{2}*A*B*\sin(-\beta)$$

Band-pass filter adjusted to frequency $\beta$ expresses asymmetry in gear B.

$$z(t)= \tfrac{1}{2}*A*B*\sin(\beta)$$

It should be understood that the AM demodulator 231 can, for example, comprise a one-step superheterodyne receiver or a two-step superheterodyne receiver.

Furthermore, returning to the embodiment in Fig. 2: the output signal from the band-pass filter 232, indicated by z(n), is passed to a calculating module 233, where a value is calculated that represents a statistical measurement for the signal z(n). In an example, the statistical measurement may be a standard deviation for z(n). In an alternative example, the statistical measurement can be an arithmetical mean of the numerical value for the signal z(n). The standard deviation or mean can typically be calculated during the duration of the time segment of the input signal x(n).

This value is passed to a comparison module 234 where it is compared with a limiting parameter 239. The limiting parameter 239 is set by an operator and is based on experience of operation of the mechanical structure.

The limiting parameter 239 may be one of a number of limiting parameters kept stored in a memory. Each of the limiting parameters can be associated with a particular relevant rotating machine component, in this case a particular gear, and a condition evaluation for the machine component, i.e., the gear.

If the value that represents the statistical measurement for the signal z(n) exceeds the limiting parameter 239, an output signal 236 is emitted at 235 which identifies the relevant rotating machine component, in this case the gear. Furthermore, an output signal 238 is emitted at 237 which indicates a fault degree of the relevant rotating machine component, i.e., the gear.

The output signals 236, 237 are the basis for the message that is given to identify the relevant rotating component, i.e., the gear, and to indicate its condition evaluation. The message may typically identify the gear and indicate that the gear is out-of-round; that the gear is worn or degraded; that there is a damaged tooth in the gear etc., and indicate the fault degree of the gear. The fault degree is estimated in accordance with the statistical measurement that was calculated in the calculating module 233.

The step of selecting, on the basis of the input signal and the reference signal, one among a plurality of predetermined condition evaluations for the mechanical structure can be carried out by using a plurality of processing modules 230. One and the same measuring signal 210 can typically be passed to each one of the processing modules. Further, the same plurality of signal generating modules 220 can be used and separate signals 224, 225 can be passed to respective processing modules 230. The selection of one of the plurality of predetermined condition evaluations can then be made on the basis of a comparison of the output signal 238 for the respective processing modules, which indicates the fault degree of the rotating component, in this case the gear. When the component is a gear, it is expedient to use two processing modules 230.

The method can be terminated in the terminating step 240.

Fig. 3 is a schematic flow diagram illustrating principles of a method for providing a condition evaluation of a mechanical structure which incudes a rotating machine component, in this embodiment in the form of a ball bearing. The mechanical structure can in this case be a motor or engine, generator or another device with at least one rotating part.

The method comprises, in the step indicated by 310, providing a measuring signal that represents mechanical vibrations in the mechanical structure with the aid of a vibration sensor or microphone. This signal can further be sampled, quantised and A/D-converted, and a limited time segment can be taken of the resultant digital signal, as explained with reference to Fig. 1 above. The resultant signal, which has a limited duration corresponding to the time segment, is indicated by x(n) in Fig. 3, and is used as input signal for the processing indicated by the stippled processing module 330.

In the processing module 330, the method further comprises selecting, on the basis of the input signal and a number of reference signals, one among a plurality of predetermined condition evaluations for the mechanical structure.

A ball bearing that is in a good condition generates noise that is white in frequency and Gaussian in amplitude. Faults can typically arise such as indentations in a ball, in the inner race or in the outer race. When the balls roll over an indentation, regular shock pulses are produced. The applicant has found that by observing the time between the shock pulses, an indication may be derived of where the indentation is on the outer ring, inner ring or on a ball.

This type of fault in a ball bearing can therefore be detected by running at least one synthetic shock pulse generator having a cycle time equal to the time between the shock pulses described above. This will be able to detect possible faults in either the outer ring, inner ring or on a ball. To be able to detect possible faults in the outer ring, inner ring and ball, three shock pulse generators must be used for generation of three shock pulse signals.

The measured signal from the ball bearing is correlated with the signal from each of the synthetic shock pulse generators. The correlation results can tell us whether the damage is on the outer ring, inner ring or ball and how great the symptom is.

In this embodiment, the reference signals therefore comprise a periodic pulse signal. Each pulse in the periodic pulse signal can, for example, be of the type "attenuated sine" (or "attenuated cosine"), i.e., a sine (or cosine) signal with amplitude that diminishes with time, in each pulse. The attenuation in each pulse can, for example, be linear (where each pulse is of the type "sin(x)/x") or exponential.

Alternatively, the periodic pulse signal can be a rectangular, periodic pulse signal, as schematically indicated in Figure 3.

The provision of the reference signals can be effected by generating the reference signal in the reference signal generation module 320.

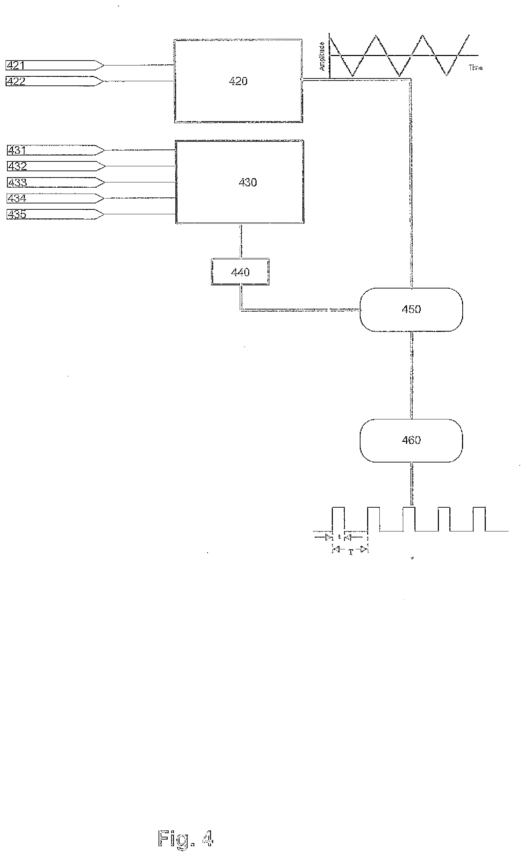

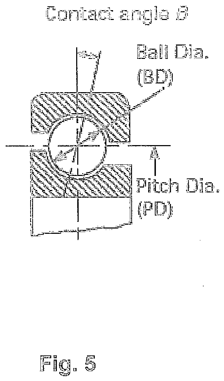

The reference signal is generated in the reference signal generation module 320 on the basis of a first parameter 321 for the rotating machine component, in this case the ball bearing, a second parameter 322 that indicates the rotational speed $f_r$, and advantageously a third parameter 323 that indicates a variation in the cycle time of the shock pulses. Possible parameters for the ball bearing are discussed with reference to Figs. 4 and 5 below.

It may be an advantage to vary the cycle time between the shock pulses slightly, for example, +/-1% or +/- 2% from a nominal value, within a time interval that can correspond to the time segment for the vibration measurement (i.e., about 3 seconds, or in the range of 1 to 5 seconds).

The reference signal generation module 320 emits a reference signal 324, also indicated by d(n), which indicates an expected vibration signal for a ball bearing with a particular type of fault. Functionality for the reference signal generation module is further specified with reference to Fig. 4 below.

The input signal x(n) is passed to a cross-correlation module 331. The reference signal 324 is also passed to this module. In the cross-correlation module, the reference signal and the measured vibration signal are compared by cross-correlation.

The output signal from the cross-correlation module 331 is passed to a mean value module 332, where a value is calculated that represents an arithmetical mean of the numerical value for the signal emitted from the cross-correlation module. The mean can typically be calculated over the duration of the time segment for the input signal x(n).

This value is passed to a comparison module 334, where it is compared with a limiting parameter 339. The limiting parameter 339 may be one of a number of limiting parameters that are kept stored in a memory. Each of the limiting parameters can be associated with a particular relevant rotating machine component, in this case a particular ball bearing, and a condition evaluation for the machine component, i.e., the ball bearing.

If the value that represents the mean of the numerical value for the signal z(t) exceeds the limiting parameter 339, an output signal 336 is emitted at 335 that identifies the relevant rotating machine component, in this case the ball bearing. Furthermore, an output signal 338 is emitted at 337, which indicates a fault degree of the relevant rotating machine component, i.e., the ball bearing. The fault degree is derived from the mean calculated in the mean value module 332.

The output signals 335, 337 are the basis for the messages that are emitted to identify the relevant rotating component, i.e., the ball bearing, and to indicate the condition evaluation of the ball bearing. The message can typically identify the ball bearing and indicate that there is damage on an outer race in the bearing, damage on an inner race in the bearing, or damage on a ball or rolling element in the bearing.

Manufacturers of individual ball bearings supply information about and optionally programs for how such shock pulse frequencies can expediently be calculated for particular types of bearings.

The step of selecting, on the basis of the input signal and the reference signal, one among a plurality of predetermined condition evaluations for the mechanical structure, can be carried out by using a plurality of processing modules 330. One and the same measuring signal 310 can typically be passed to each one of the processing modules 330. Furthermore, the same plurality of signal generating modules 320 can be used, and separate reference signals 324 (shock pulse signals) passed to respective processing modules 330. The selection of one of the plurality of predetermined condition evaluations can then be made on the basis of a comparison of the output signal 338 for the respective processing modules, which indicates the fault degree of the rotating component, in this case the ball bearing. When the component is a ball bearing, it is expedient to use three processing modules 230.

The method can be terminated in the terminating step 240.

Fig. 4 is a schematic flow diagram illustrating possible principles of generating reference signals for the embodiment shown in Fig. 3, i.e., for generating shock pulses in the reference signal generation module 320.

In Fig. 4, 420 indicates a triangular or sawtooth wave generator module for generating a variation signal that represents small, periodic variations in the period between the pulses in the desired shock pulse signal. The input parameters for the generator module 420 may comprise min/max period and min/max amplitude for the variation signal.

At 430 there is indicated a module for calculating bearing frequencies. The input parameters for this can be ball bearing geometry data, including the number of balls in the bearing (n), 431, ball diameter (BD), 432, pitch diameter (PD), 433, contact angle (β), 434, revolutions per second (fr), 435. Shock pulse frequencies can, for example, be calculated from the formulae below. See also the illustration of the ball diameter (BD), pitch diameter (PD) and contact angle for a ball bearing shown in Fig. 5.

BPFO, Outer Race Defect:

$$f(Hz) = \frac{n}{2} fr \left( 1 - \frac{BD}{PD} \cos\beta \right)$$

BPFI, Inner Race Defect:

$$f(Hz) = \frac{n}{2} fr \left( 1 + \frac{BD}{PD} \cos\beta \right)$$

BFF, a Ball Defect:

$$f(Hz) = \frac{PD}{BD} fr \left[ 1 - \left( \frac{BD}{PD} \cos\beta \right) \left( \frac{BD}{PD} \cos\beta \right) \right]$$

n = number of balls in the bearing
$f_r$ = relative rev/s between inner and outer rings or races.

Further in Fig. 4, 440 indicates an inverting module. The inverting module 440 can, for example, receive a frequency value (such as 333 Hz), and will then emit a corresponding cycle time value 1/the frequency value (in such instance 3000 microseconds).

The summation module 450 adds the cycle time given by the bearing frequency calculation module 430 and the periodic variation given by the triangular or sawtooth wave generator module 420. This sum is passed to a pulse generator 460 which thus emits a shock pulse signal having a period essentially as given by the formulae for bearing frequencies mentioned above, but with a smaller periodic variation.

Fig. 5 is a schematic figure illustrating certain possible parameters for a ball bearing. More specifically, it illustrates ball diameter (BD), pitch diameter (PD) and ball bearing contact angle (β), already mentioned with reference to Fig. 4 above.

In the above, it is described that the method steps for selecting the relevant condition evaluation for the mechanical structure can be carried out in different ways.

In the embodiment shown in Fig. 2, where the rotating machine component includes a gear transmission, the reference signals comprise a stationary periodic signal, and the step of selecting a condition evaluation comprises amplitude demodulation of the input signal.

In the embodiment shown in Fig. 3, where the rotating machine component includes a rotating bearing, the reference signals comprise a periodic pulse signal, and the step of selecting a condition evaluation comprises calculating cross-correlation between the input signal and respective reference signals.

In both the aforementioned embodiments, and in other embodiments, the method step of selecting one of a plurality of condition evaluations can comprise processing the input signal and reference signal in the time domain. In both the aforementioned embodiments, and in other embodiments, the reference signal can be generated on the basis of at least one parameter for the rotating machine component (e.g., the gear, the rotating bearing) and a rotational speed for the rotating machine component.

Drive belts should also be regarded as covered by the term "rotating machine component". For example, the invention can be used to provide a condition evaluation of a toothed belt, using an identical or similar execution as presented for gears. Similarly, the invention can be used to provide a condition evaluation of a V-belt, with an identical or similar execution as that presented for a ball bearing.

In further possible embodiments, the reference signals can include a prestored pattern, and the step of selecting one of a plurality of condition evaluations can comprise use of a recognition algorithm of such type as is used in digital pattern recognition.

The method can be implemented as a computer program. This can comprise processing instructions which, when executed by an electronic processing unit, cause the electronic processing unit to perform the method as described above. The computer program can be stored in a memory or on a storage medium. The computer program can also be represented by a propagated signal that is transmitted in a communication network, e.g., the Internet.

A device for providing a condition evaluation of a mechanical structure, which employs the method as described, can comprise at least one electronic processing unit and a memory, the memory keeping stored a computer program as indicated above, i.e., a computer program which implements the method as described when it is executed by the processing unit. The processing unit can further be connected to suitable I/O units, typically via a bus system, thereby allowing the device to receive, e.g., an external measuring signal from a vibration sensor, emit signals to a display etc. Such a device can, for example, be implemented as a smartphone, which contains all the necessary processing resources and memory, and where an inbuilt microphone can provide measuring signals 210, 310, and the display can show messages 236, 238, 336, 237 regarding, inter alia, condition evaluation. The computer program as described can in such a case be contained as an application in the memory of the smartphone.

Although the method according to the invention in the detailed embodiment above has been disclosed as being capable of being executed by an electronic unit, such as a microprocessor or a microcontroller, it should be understood that implementations carried out using discrete and/or integrated analogue and digital circuits, may also lie within the scope of the invention.

**Claims**

1.    A method for providing a condition evaluation of a mechanical structure (101) which includes a rotating machine component, the method comprising:

> providing an input signal that represents mechanical vibrations in the mechanical structure;
> providing a reference signal;
> selecting, on the basis of the input signal and the reference signal, one among a plurality of predetermined condition evaluations for the mechanical structure,
> wherein the reference signal is generated on the basis of at least one parameter for the rotating machine component and a rotational speed for the rotating machine component,

**characterized in that**
the machine component comprises a gear transmission, and the provision of the reference signal comprises generating a modulated stationary periodic signal, and the step of selecting one of a plurality of condition evaluations comprises amplitude demodulation of the input signal,
or
the machine component comprises a rotating bearing, and the provision of the reference signal comprises generating a periodic pulse signal, and the step of selecting one of a plurality of condition evaluations comprises calculating cross-correlation between the input signal and the reference signal.

2.    A method in accordance with claim 1, wherein the step of selecting one of a plurality of condition evaluations comprises processing the input signal and the reference signal in the time domain.

3.    A method in accordance with claim 1, wherein the machine component comprises a gear transmission, and the provision of the reference signal comprises generating a modulated stationary periodic signal, and the step of selecting one of a plurality of condition evaluations comprises amplitude demodulation of the input signal, and wherein the plurality of condition evaluations comprises:

> an evaluation of a out-of-round gear;
> an evaluation of a worn or degraded gear; and
> an evaluation of a damaged tooth in a gear.

4.    A method in accordance with claim 1,
wherein the machine component comprises a rotating bearing, and the provision of the reference signal comprises generating a periodic pulse signal, and
the step of selecting one of a plurality of condition evaluations comprises calculating cross-correlation between the input signal and the reference signal, and
wherein the plurality of condition evaluations comprise:

> an evaluation of damage on an outer race of the bearing;
> an evaluation of damage on the inner race of the bearing; and
> an evaluation of damage on a ball or rolling element in the bearing.

5.    A computer program, comprising processing instructions which, when executed by an electronic processing unit, cause the electronic processing unit to perform the method as set forth in one of claims 1-4.

6.    A computer program in accordance with claim 5,
stored in a memory or on a storage medium, or represented by a propagated signal that is transmitted in a communication network.

7.    A device for providing a condition evaluation of a mechanical structure, comprising an electronic processing unit and a memory,
the memory keeping stored a computer program as set forth in claim 6.

**Patentansprüche**

1. Verfahren zum Bereitstellen einer Zustandsabschätzung einer mechanischen Struktur (101), welche eine drehende Maschinenkomponente aufweist, wobei das Verfahren aufweist:

   Bereitstellen eines Eingangssignals, das mechanische Vibrationen in der mechanischen Struktur repräsentiert, Bereitstellen eines Referenzsignals,
   Auswählen, auf der Basis des Eingangssignals und des Referenzsignals, einer aus einer Mehrzahl von vorbestimmten Zustandsabschätzungen für die mechanische Struktur,
   wobei das Referenzsignal erzeugt wird auf Basis von wenigstens einem Parameter für die drehende Maschinenkomponente und einer Drehzahl für die drehende Maschinenkomponente,
   **dadurch gekennzeichnet, dass**
   die Maschinenkomponente ein Zahnradgetriebe aufweist und das Bereitstellen des Referenzsignals aufweist Erzeugen eines modulierten stationären periodischen Signals, und der Schritt des Auswählens einer aus einer Mehrzahl von Zustandsabschätzungen aufweist Amplitudendemodulation des Eingangssignals,
   oder die Maschinenkomponente ein Drehlager aufweist und das Bereitstellen des Referenzsignals aufweist Erzeugen eines periodischen Pulssignals, und der Schritt des Auswählens einer aus einer Mehrzahl von Zustandsabschätzungen aufweist Berechnen einer Kreuzkorrelation zwischen dem Eingangssignal und dem Referenzsignal.

2. Verfahren gemäß Anspruch 1, wobei der Schritt des Auswählens einer aus einer Mehrzahl von Zustandsabschätzungen aufweist Verarbeiten des Eingangssignals und des Referenzsignals im Zeitbereich.

3. Verfahren gemäß Anspruch 1, wobei die Maschinenkomponente ein Zahnradgetriebe aufweist und das Bereitstellen des Referenzsignals aufweist Erzeugen eines modulierten stationären periodischen Signals, und der Schritt des Auswählens einer aus einer Mehrzahl von Zustandsabschätzungen aufweist Amplitudendemodulation des Eingangssignals, und wobei die Mehrzahl von Zustandsabschätzungen aufweist:

   eine Abschätzung eines Unrund-Zahnrads,
   eine Abschätzung eines verschlissenen oder geschwächten Zahnrads, und
   eine Abschätzung eines beschädigten Zahns bei einem Zahnrad.

4. Verfahren gemäß Anspruch 1,
   wobei die Maschinenkomponente ein Drehlager aufweist und das Bereitstellen des Referenzsignals aufweist Erzeugen eines periodischen Pulssignals, und der Schritt des Auswählens einer aus einer Mehrzahl von Zustandsabschätzungen aufweist Berechnen einer Kreuzkorrelation zwischen dem Eingangssignal und dem Referenzsignal, und
   wobei die Mehrzahl von Zustandsabschätzungen aufweist:

   eine Abschätzung eines Schadens an einem Außenring des Lagers,
   eine Abschätzung eines Schadens am Innenring des Lagers, und
   eine Abschätzung des Schadens an einer Kugel oder einem Wälzelement im Lager.

5. Computerprogramm aufweisend Prozessschritte, welche, wenn von einer elektronischen Prozesseinheit ausgeführt, die elektronische Prozesseinheit veranlassen, das Verfahren gemäß einem der Ansprüche 1 bis 4 durchzuführen.

6. Computerprogramm gemäß Anspruch 5, gespeichert in einem Speicher oder einem Speichermedium, oder repräsentiert durch ein fortgeleitetes Signal, das in einem Kommunikationsnetzwerk übertragen wird.

7. Vorrichtung zum Bereitstellen einer Zustandsabschätzung einer mechanischen Struktur, aufweisend eine elektronische Prozesseinheit und einen Speicher,
   wobei der Speicher ein Computerprogramm gemäß Anspruch 6 gespeichert hält.

**EP 3 092 472 B1**

**Revendications**

1. Procédé de fourniture d'une évaluation d'état d'une structure mécanique (101) qui comporte un composant de machine tournante, le procédé comprenant :

   la fourniture d'un signal d'entrée qui représente des vibrations mécaniques dans la structure mécanique ;
   la fourniture d'un signal de référence ;
   la sélection, sur la base du signal d'entrée et du signal de référence, de l'une parmi une pluralité d'évaluations d'état prédéterminées pour la structure mécanique,
   dans lequel le signal de référence est généré sur la base d'au moins un paramètre pour le composant de machine tournante et d'une vitesse de rotation pour le composant de machine tournante,
   **caractérisé en ce que**
   le composant de machine comprend un entraînement par engrenage, et la fourniture du signal de référence comprend la génération d'un signal périodique stationnaire modulé, et l'étape de sélection d'une de la pluralité d'évaluations d'état comprend une démodulation d'amplitude du signal d'entrée,
   ou
   le composant de machine comprend un palier rotatif, et la fourniture du signal de référence comprend la génération d'un signal à impulsion périodique, et l'étape de sélection de l'une d'une pluralité d'évaluations d'état comprend le calcul d'une corrélation croisée entre le signal d'entrée et le signal de référence.

2. Procédé selon la revendication 1, dans lequel l'étape de sélection de l'une d'une pluralité d'évaluations d'état comprend le traitement du signal d'entrée et du signal de référence dans le domaine temporel.

3. Procédé selon la revendication 1, dans lequel le composant de machine comprend un entraînement par engrenage, et la fourniture du signal de référence comprend la génération d'un signal périodique stationnaire modulé, et l'étape de sélection de l'une d'une pluralité d'évaluations d'état comprend une démodulation d'amplitude du signal d'entrée, et
   dans lequel la pluralité d'évaluations d'état comprend :

   une évaluation d'engrenage ovalisé ;
   une évaluation d'engrenage usé ou détérioré ; et
   une évaluation d'une dent endommagée dans un engrenage.

4. Procédé selon la revendication 1,
   dans lequel le composant de machine comprend un palier rotatif, et la fourniture du signal de référence comprend la génération d'un signal à impulsion périodique, et l'étape de sélection de l'une d'une pluralité d'évaluations d'état comprend le calcul d'une corrélation croisée entre le signal d'entrée et le signal de référence, et
   dans lequel la pluralité d'évaluations d'état comprend :

   une évaluation d'endommagement sur une bague extérieure du palier;
   une évaluation d'endommagement sur la bague intérieure du palier; et
   une évaluation d'endommagement sur une bille ou élément roulant dans le palier.

5. Programme d'ordinateur, comprenant des instructions de traitement qui, lorsqu'elles sont exécutées par une unité de traitement électronique, amènent l'unité de traitement électronique à réaliser le procédé présenté dans l'une des revendications 1 à 4.

6. Programme d'ordinateur selon la revendication 5,
   stocké dans une mémoire ou sur un support de stockage, ou représenté par un signal propagé qui est transmis dans un réseau de communication.

7. Dispositif de fourniture d'une évaluation d'état d'une structure mécanique, comprenant une unité de traitement électronique et une mémoire,
   la mémoire conservant stocké un programme d'ordinateur tel que présenté à la revendication 6.

Fig. 1

Fig. 3

421
422

420

431
432
433
434
435

430

440

450

460

Fig. 4

Fig. 5

**REFERENCES CITED IN THE DESCRIPTION**

**Patent documents cited in the description**

- US 7421349 B
- US 20130096848 A

- US 2004034483 A